# EUROPÄISCHE PATENTANMELDUNG

(11) **EP 1 068 974 A1**
(43) Veröffentlichungstag der Anmeldung: **17.01.2001**
(21) Anmeldenummer: 99113378.6
(22) Anmeldetag: 10.07.1999
(51) Int. Cl.: B60J 10/00, B60J 10/12

(54) **Dichtungsanordnung für ein Fahrzeug-Schiebedach,-Schiebehebedach,-Spoilerdach,-Lamellendach oder dergleichen**

(30) Priorität: 10.07.1999 DE 19830875
(71) Anmelder: WEBASTO KAROSSERIESYSTEME GmbH, D-82131 Stockdorf (DE)
(72) Erfinder: Schwarz, Markus, 79822 Titisee/Neustadt (DE)
(74) Vertreter: Wiese, Gerhard

(57) **Zusammenfassung**

Dichtungsanordnung für einen Spalt (3) zwischen benachbarten Deckelkanten von zwei in ihrer Schließstellung hintereinanderliegenden, verstellbaren Deckelelementen (1, 2) eines Fahrzeug - Schiebedaches, - Schiebehebedaches, - Spoilerdaches, - Lamellendaches oder dergleichen. Im Spaltbereich ist an beiden Deckelelementen (1, 2) bzw. an diesen zugeordneten Rahmenteilen (13 bzw. 14) jeweils ein mindestens bereichsweise elastisches Dichtelement (6, 7) angebracht. Die beiden Dichtelemente (6, 7) sind entlang der Deckelkanten der beiden Deckelelemente (1,2) symmetrisch angeordnet, und in der Schließstellung der Deckelelemente (1, 2) überlappen sich die beiden Dichtelemente mit Dichtlippen (11, 12) im Spaltbereich dichtend. Elastizität und Form der Dichtelemente sind so beschaffen, daß die Dichtelemente gegenseitige Kipp- und/oder Höhenverstellbewegungen der beiden Deckelelemente zulassen.

## Beschreibung

Die vorliegende Erfindung betrifft eine Dichtungsanordnung für den Spalt zwischen benachbarten Deckelkanten von zwei in ihrer Schließstellung hintereinanderliegenden, verstellbaren Deckelelementen eines Fahrzeug - Schiebedaches, - Schiebehebedaches, - Spoilerdaches, - Lamellendaches oder dergleichen, mit einem im Spaltbereich an dem einen Deckelelement angebrachten, mindestens bereichsweise elastischen Dichtelement.

Bei einer bekannten Dichtungsanordnung dieser Art (DE 44 43 525 C1) ist das Dichtelement an einem Wasserablauf des jeweils hinteren Deckelelements angeordnet, und dieses Dichtelement weist einen einstückig angeformten, elastisch biegsamen Dichtabschnitt auf, der durch eine Stoßkante des jeweils vorderen Deckelelements abhängig von einer Öffnungs- oder Schließbewegung desselben zwischen einer entspannten, einen Schwallwasserschutz bildenden, nach oben ausgestellten Ruheposition und einer den Wasserablauf nicht überdeckenden Belastungsposition beweglich ist. Im Falle der bekannten Dichtungsanordnung kann ausgehend von der Schließstellung der Deckelelemente das vordere Deckelelement mit seiner Stoßkante gegenüber dem hinteren Deckelelement angehoben oder umgekehrt das hintere Deckelelement mit seinem Wasserablauf gegenüber dem vorderen Deckelelement abgesenkt werden. Es ist jedoch nicht möglich, ausgehend von der Schließstellung das hintere Deckelelement mit seinem Wasserablauf gegenüber dem vorderen Deckelelement anzuheben oder das vordere Deckelelement mit seiner Stoßkante gegenüber dem hinteren Deckelelement abzusenken. Aufgrund der Ausgestaltung der Dichtungsanordnung ist daher die gegenseitige Verstellbarkeit der Deckelelemente beschränkt.

Der Erfindung liegt die Aufgabe zugrunde, eine Dichtungsanordnung zu schaffen, die vielseitiger einzusetzen ist, und die es insbesondere gestattet, ausgehend von der Schließstellung der Deckelelemente wahlweise das eine Deckelelement mit seiner dem anderen Deckelelement zugewendeten Kante und/oder das andere Deckelelement mit seiner dem einen Deckelelement zugewendeten Kante anzuheben oder abzusenken.

Diese Aufgabe wird ausgehend von einer Dichtungsanordnung der eingangs genannten Art dadurch gelöst, daß an dem anderen Deckelelement im Spaltbereich gleichfalls ein mindestens bereichsweise elastisches Dichtelement angebracht ist, daß die beiden Dichtelemente entlang der Deckelkanten der beiden Deckelelemente symmetrisch angeordnet sind und sich in der Schließstellung der Deckelelemente im Spaltbereich dichtend überlappen, und daß Elastizität und Form der Dichtelemente so beschaffen sind, daß die Dichtelemente gegenseitige Kipp- und/oder Höhenverstellbewegungen der beiden Deckelelemente zulassen.

Bei Anwendung der Dichtungsanordnung nach der Erfindung können einander benachbarte Deckelkanten zweier Deckelelemente aus der geschlossenen Position völlig unabhängig voneinander nach oben ausgestellt oder nach unten abgesenkt werden, während in der Schließstellung gleichwohl eine einwandfreie Abdichtung des Spalts zwischen den benachbarten Deckelkanten gewährleistet ist. Für die Funktion des Dichtsystems macht es dabei auch keinen Unterschied, welches der beiden Deckelelemente zuerst in die geschlossene Position gebracht wird.

Vorzugsweise sind die beiden Dichtelemente mindestens näherungsweise spiegelbildlich gleich ausgebildet.

In weiterer Ausgestaltung der Erfindung sind die überlappenden Teile der Dichtelemente elastisch ausgebildet.

Die überlappenden Teile der Dichtelemente verlaufen zweckmäßig im wesentlichen in Richtungen parallel zur Erstreckung der Deckelelemente. Sie können insbesondere gewölbt oder abgeknickt sein.

Jedes der Dichtelemente kann vorteilhaft in an sich bekannter Weise (DE 44 43 525 Cl) an einer Wasserrinne angebracht sein, welche die betreffende Deckelkante in der Schließstellung des zugehörigen Deckelelements untergreift und welche ihrerseits mit dem zugehörigen Deckelelement verbunden ist. Stattdessen oder zusätzlich kann jedes der Dichtelemente selbst eine elastische Wasserrinne bilden, welche die betreffende Deckelkante in der Schließstellung des zugehörigen Deckelelements untergreift.

An den Deckelkanten selbst können jeweils Hilfsdichtungen angebracht sein.

Entsprechend einer abgewandelten Ausführungsform der Erfindung kann jedes der Dichtelemente eine elastische Wasserrinne bilden, welche über die betreffende Deckelkante in Richtung auf die benachbarte Deckelkante vorspringt.

Der die Wasserrinne bildende Teil der Dichtelemente ist zweckmäßig konkav gekrümmt.

Bevorzugte Ausführungsformen der Erfindung sind nachstehend unter Bezugnahme auf die beigefügten Zeichnungen näher erläutert. Es zeigen:
- FIG. 1: eine schematische Schnittansicht einer ersten Ausführungsform der Dichtanordnung;
- FIG. 2: eine schematische Schnittansicht einer abgewandelten Ausführungsform der Dichtanordnung; und
- FIG. 3: eine schematische Schnittansicht einer weiter abgewandelten Ausführungsform der Dichtanordnung.

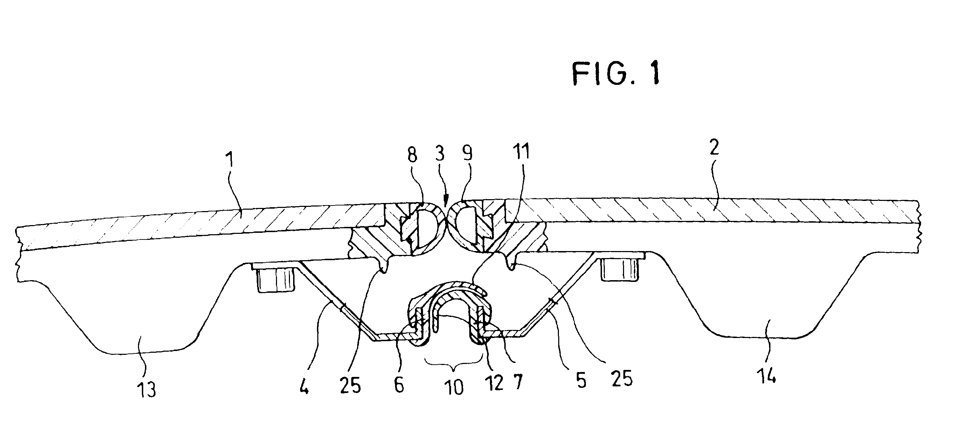

Bei der Ausführungsform gemäß FIG. 1 sind an verstellbaren Deckelelementen 1 und 2 eines Fahrzeug - Schiebedaches, - Schiebehebedaches, - Spoilerdaches, - Lamellendaches oder dergleichen, die in ihrer Schließstellung in der skizzierten Weise hintereinander liegen, Randdichtungen 8 beziehungsweise 9, vorliegend in Form von Hohlkammerdichtungen, jeweils umlaufend an Deckelelement- Rahmenteilen 13, 14 angebracht. Die Randdichtungen 8 und 9 bilden den abzudichtenden Spalt 3; sie wirken wie bei konventionellen Schiebedächern als Dichtung, Optikelement (Sichtblende) Geräuschdämmung. Zwei feste Wasserrinnen 4 und 5 sind an den Rahmenteilen 13, 14 der Deckelelemente 1 und 2 so befestigt, zum Beispiel in der angedeuteten Weise angeschraubt, daß zwischen ihnen unterhalb des abzudichtenden Spalts 3 ein Zwischenraum 10 entsteht. Der Zwischenraum 10 ist so groß bemessen, daß entweder das Deckelelement 1 am Deckelelement 2 vorbei abgesenkt werden kann, oder daß sich umgekehrt das Deckelelement 1 am Deckelelement 2 vorbei absenken läßt.

Auf die Wasserrinnen 4 und 5 ist jeweils ein Dichtelement 6 beziehungsweise 7 aufgesteckt. Die Dichtelemente 6 und 7 sind entlang der in der Schließstellung der Deckelelemente einander gegenüberliegenden Deckelkanten der beiden Deckelelemente 1 und 2 spiegelsymmetrisch angeordnet. Die Dichtelemente 6 und 7 weisen eine nach oben gewölbte Dichtlippe 11 beziehungsweise 12 auf, die im wesentlichen in einer Richtung parallel zur Erstreckung der Deckelelemente verläuft. Die Dichtlippen 11 und 12 befinden sich in der Schließstellung der Deckelelemente 1, 2 unterhalb des Spalts 3, und in dieser Stellung überlappen sie einander dichtend im Spaltbereich, wodurch der Zwischenraum 10 geschlossen wird. Zusätzlich wirkt die jeweils oben liegende Dichtlippe als Abdeckung, die das eintretende Wasser in die Wasserrinnen 4 und 5 leitet. Mindestens der die Dichtlippen 11 und 12 bildende Teil der Dichtelemente 6 und 7 ist elastisch. Elastizität und Form der Dichtelemente 6, 7 und insbesondere der Dichtlippen 11 und 12 sind so beschaffen, daß die Dichtelemente gegenseitige Kipp- und/oder Höhenverstellbewegungen der beiden Deckelelemente 1,2 zulassen. Die Dichtelemente 6 und 7 behindern daher die Deckelelemente 1, 2 nicht bei deren Bewegungen; ihre Dichtlippen werden einfach weggedrückt. Je nachdem, welches Deckelelement 1 oder 2 zuerst die in der Figur gezeigte geschlossene Position einnimmt, liegt entweder die Dichtlippe 11 auf der Dichtlippe 12 oder umgekehrt die Dichtlippe 12 auf der Dichtlippe 11.

Dringt Wasser durch den Spalt 3, tropft es auf die dachartig nach oben gewölbten Dichtlippen 11 bzw. 12, und es wird in die Wasserrinnen 4 und 5 geleitet. Abtropfkanten 25 an der Unterseite der Rahmenteile 13 bzw. 14 alternativ an den Unterseiten der Dichtungen 8 bzw. 9 sorgen für ein gezieltes Einleiten des durch den Spalt 3 eindringenden Wassers in die Wasserrinnen 4 bzw. 5 und verhindern ein Weiterkriechen von Feuchtigkeit an der Innenseite der Deckelelemente 1 bzw. 2. Von den Wasserrinnen 4 bzw. 5 wird das Wasser in an sich bekannter Weise über weitere an seitlichen Rahmenteilen längs verlaufenden Wasserrinnen, Wasser-ablaufschläuchen und dergleichen wieder aus dem Fahrzeug herausgeführt.

Statt gewölbt, können die Dichtlippen 11 und 12 auch dachartig abgeknickt sein. Die Dichtelemente 6 und 7 können gegebenenfalls auch an den Wasserrinnen 4, 5 angeformt oder in anderer Weise mit diesen einstückig verbunden sein.

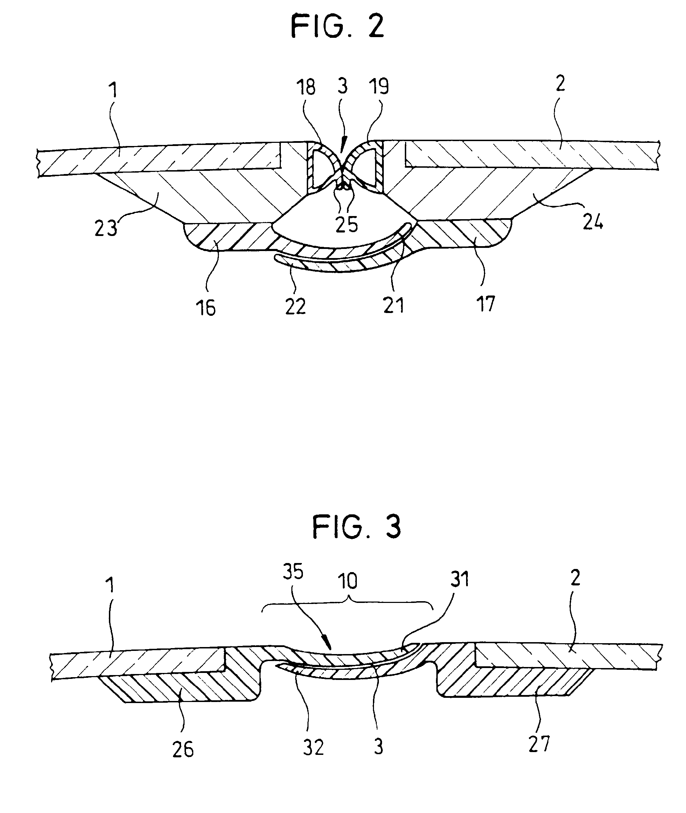

Bei dem Ausführungsbeispiel gemäß Fig.2 sind Dichtelemente 16 und 17 an einem Rahmenteil 28 beziehungsweise 29 der Deckelelemente 1, 2 angebracht und mit elastischen Dichtlippen 21, 22 versehen. Analog den Dichtlippen 11 und 12 befinden sich die Dichtlippen 21, 22 in der Schließstellung der Deckelelemente 1, 2 unterhalb des Spalts 3. In dieser Stellung überlappen sie einander dichtend im Spaltbereich und bilden aufgrund ihrer nach oben offenen Schalenform selbst eine Wasserrinne, die über den Spalt 3 eingedrungenes Wasser auffängt. Von dort wird das Wasser in der oben skizzierten Weise abgeleitet.

Je nachdem, welches Deckelelement zuerst die Schließposition einnimmt, liegt entweder die Dichtlippe 21 oder die Dichtlippe 22 obenauf. Für die Funktion des Dichtsystems macht dies wegen der symmetrischen Anordnung der Dichtelemente 16, 17 keinen Unterschied. Wird eine beliebige Deckelkante der Deckelelemente 1, 2 nach oben angehoben oder nach unten abgesenkt, werden die beiden Dichtlippen 21, 22 soweit weggedrückt und verformt, wie dies für die Deckelbewegung notwendig ist.

Den Spalt 3 begrenzende Randdichtungen 18, 19 sind wiederum als Hohlkammerdichtungen ausgebildet, bei diesem Ausführungsbeispiel aber zusätzlich jeweils mit einer Abtropfkante 25 versehen.

Fig. 3 zeigt ein Ausführungsbeispiel, beim dem Dichtelemente 26, 27 unmittelbar an den Deckelelemente 1, 2 befestigt und so angeordnet sind, daß sie zueinander symmetrisch im Sichtbereich entlang der einander gegenüberliegenden Deckelkanten verlaufen. Die Dichtelemente 26, 27 weisen elastische Dichtlippen 31, 32 auf, die selbst den Spalt 3 begrenzen. Die Dichtlippen 31, 32 überlappen sich bei geschlossenem Dachsystem im Bereich des Zwischenraums 10. Bei dieser Variante bilden die übereinanderliegenden Dichtlippen 31, 32 eine außenliegende, muldenförmige Wasserrinne 35, die auf die Dichtelemente 26, 27 auftreffendes Wasser seitlich abführt. Die Ausbildung ist so zu treffen, daß durch den Spalt 3 kein Wasser hindurchtritt.

Je nachdem, welches der Deckelelemente 1, 2 zuerst die Schließposition einnimmt, liegt auch in diesem Fall entweder die Dichtlippe 31 oder die Dichtlippe 32 obenauf, ohne daß sich dies auf die Funktion des Dichtsystems auswirkt. Wird die eine oder die andere Deckelkante der Deckelelemente 1, 2 nach oben angehoben oder nach unten abgesenkt, werden die beiden Dichtlippen 31, 32 soweit weggedrückt und verformt, wie dies die Deckelbewegung erfordert.

Somit steuern die Dichtelemente 6,7 bzw. 16,17 bzw. 26,27 zumindestens einen Teil ihrer Bewegungen vorzugsweise gegenseitig.

### Bezugszeichenliste

- 1, 2: Deckelelement
- 3: Spalt
- 4, 5,: Wasserrinne
- 6, 7: Dichtelement
- 8, 9: Randdichtung
- 10: Zwischenraum
- 11, 12: Dichtlippe
- 13, 14: Rahmenteil
- 16, 17: Dichtelement
- 18, 19: Randdichtung
- 21, 22: Dichtlippe
- 23, 24: Rahmenteil
- 25: Abtropfkante
- 26, 27: Dichtelement
- 31, 32: Dichtlippe
- 35: Wasserrinne

## Patentansprüche

1. Dichtungsanordnung für den Spalt zwischen benachbarten Deckelkanten von zwei in ihrer Schließstellung hintereinanderliegenden, verstellbaren Deckelelementen (1, 2) eines Fahrzeug - Schiebedaches, - Schiebehebedaches, - Spoilerdaches, - Lamellendaches oder dergleichen, mit einem im Spaltbereich an dem einen Deckelelement (1) oder einem diesem zugeordneten Rahmenteil (13, 23) angebrachten, mindestens bereichsweise elastischen Dichtelement (6, 16, 26), **dadurch gekennzeichnet, daß** an dem anderen Deckelelement (2) oder einem diesem zugeordneten Rahmenteil (14, 24) im Spaltbereich gleichfalls ein mindestens bereichsweise elastisches Dichtelement (7, 17, 27) angebracht ist, daß die beiden Dichtelemente entlang der Deckelkanten der beiden Deckelelemente symmetrisch angeordnet sind und sich in der Schließstellung der Deckelelemente (1, 2) im Spaltbereich dichtend bzw. dachartig abdeckend überlappen, und daß Elastizität und Form der Dichtelemente so beschaffen sind, daß die Dichtelemente gegenseitige Kipp- und/oder Höhenverstellbewegungen der beiden Deckelelemente zulassen.

2. Dichtungsanordnung nach Anspruch 1, **dadurch gekennzeichnet**, daß die beiden Dichtelemente (6, 7; 16 17; 26, 27) mindestens näherungsweise spiegelbildlich gleich ausgebildet sind.

3. Dichtungsanordnung nach Anspruch 1 oder 2, **dadurch gekennzeichnet**, daß die überlappenden Teile (Dichtlippen 11, 12; 21, 22, 31, 32) der Dichtelemente (6, 7; 16 17; 26, 27) elastisch ausgebildet sind.

4. Dichtungsanordnung nach einem der vorhergehenden Ansprüche, **dadurch gekennzeichnet**, daß die überlappenden Teile (Dichtlippen 11, 12; 21, 22, 31, 32) der Dichtelemente (6, 7; 16 17; 26, 27) im wesentlichen in Richtungen parallel zur Erstreckung der Deckelelemente (1, 2) verlaufen.

5. Dichtungsanordnung nach einem der vorhergehenden Ansprüche, **dadurch gekennzeichnet**, daß die überlappenden Teile (Dichtlippen 11, 12; 21, 22, 31, 32) der Dichtelemente (6, 7; 16 17; 26, 27) gewölbt oder abgeknickt sind.

6. Dichtungsanordnung nach einem der vorhergehenden Ansprüche, **dadurch gekennzeichnet**, daß jedes der Dichtelemente (6, 7) an einer Wasserrinne (4, 5) angebracht ist, welche die betreffende Deckelkante in der Schließstellung des zugehörigen Deckelelements (1, 2) untergreift und welche ihrerseits mit dem zugehörigen Deckelelement verbunden ist.

7. Dichtungsanordnung nach einem der vorhergehenden Ansprüche, **dadurch gekennzeichnet**, daß jedes der Dichtelemente (16, 17) eine elastische Wasserrinne bildet, welche die betreffende Deckelkante in der Schließstellung des zugehörigen Deckelelements (1, 2) untergreift.

8. Dichtungsanordnung nach Anspruch 6 oder 7, **dadurch gekennzeichnet**, daß an den Deckelkanten selbst jeweils Hilfsdichtungen (Randdichtung 8, 9; 18, 19) angebracht sind.

9. Dichtungsanordnung nach einem der Ansprüche 1 bis 5, **dadurch gekennzeichnet**, daß jedes der Dichtelemente (26, 27) eine elastische Wasserrinne (35) bildet, welche über die betreffende Deckelkante in Richtung auf die benachbarte Deckelkante vorspringt.

10. Dichtungsanordnung nach einem der Ansprüche 7 bis 9, **dadurch gekennzeichnet**, daß der die Wasserrinne bildende Teil (Dichtlippe 21, 22; 31, 32) der Dichtelemente (16, 17; 26, 27) konkav gekrümmt ist.

11. Dichtungsanordnung nach einem der vorhergehenden Ansprüche, **dadurch gekennzeichnet,** daß die beiden Dichtelemente (6,7; 16,17; 26,27) zumindestens einen Teil ihrer Bewegungen gegenseitig steuern.
